# EUROPEAN PATENT SPECIFICATION

(11) **EP 2 212 605 B1**
(45) Date of publication and mention of the grant of the patent: **06.12.2017**
(21) Application number: 08847508.2
(22) Date of filing: 30.10.2008
(51) Int. Cl.: F16L 11/20, F16L 11/112, C08J 5/00, C08F 10/02, B32B 1/08, B32B 25/08, B32B 27/30, B32B 5/02, B32B 7/12, B32B 25/10, B32B 27/12, B32B 27/32, F16L 11/08, B29K 105/08, B29K 201/00, B29K 267/00, B29L 23/00, B29D 23/00, B29C 47/02, B29C 47/06, B29K 23/00, B29K 77/00, F16L 11/04, B29C 47/00, C08F 210/02, B29K 277/00

(54) **LOW-PERMEATION FLEXIBLE FUEL HOSE**
FLEXIBLER KRAFTSTOFFSCHLAUCH MIT GERINGER DURCHLÄSSIGKEIT
TUYAU SOUPLE À CARBURANT À FAIBLE PERMÉATION

(30) Priority: 09.11.2007 US 938139
(43) Date of publication of application: 04.08.2010
(73) Proprietor: Gates Corporation, Denver, CO 80202 (US)
(72) Inventor: MILLER, Lance, D., Highlands Ranch, CO 80126 (US); STRIPE, Dana, S., Galesburg, IL 61401 (US); TUCKER, Hal, Littleton, CO 80127 (US)
(74) Representative: Tunstall, Christopher Stephen
(86) International application number: PCT/US2008/012293
(87) International publication number: WO 2009/061361

(56) References cited:
- EP-A1- 0 567 298
- EP-A1- 1 974 907
- EP-A1- 1 995 079
- EP-A2- 1 728 824
- WO-A1-03/028995
- JP-A- 10 089 548
- JP-A- 2000 018 440
- JP-A- 2002 181 253
- JP-A- 2004 216 665
- JP-A- 2007 009 171
- US-A1- 2006 142 485

## Description

### BACKGROUND OF THE INVENTION

### Field of the Invention

This invention relates generally to a flexible fuel hose with low permeability to modem ethanol-containing fuels, and more particularly to a hose with an intermediate barrier layer of ethylene-vinyl alcohol copolymer between inner and outer layers of non-fluorinated rubber.

### Description of the Prior Art

The increased used of motor-vehicle fuels containing alcohol, including ethanol, along with stringent emissions standards for fuel system components has necessitated improvement over conventional flexible hose constructions. Conventional fuel hose constructions used economical, fuel-resistant rubber materials such as nitrile rubber (NBR), nitrile-polyvinyl chloride blends (NBR-PVC), epichlorohydrin (ECO), and the like. Improved hose for alcohol-containing fuels now generally use one or more of various fluoroelastomers and/or fluoroplastics such as those commonly designated as FKM, PVDF, ETFE, FEP, EFEP, PCTFE, THV, PTFE, and the like (hereinafter referred to generally as fluoropolymers) to provide a barrier to alcohol and fuel permeation. The typical preferred material for a fuel hose barrier layer is a fluoropolymer film such as THV (a terpolymer of tetrafluoroethylene, hexafluoropropylene, and vinylidene fluoride) an example of which is disclosed in U.S. Pat. No. 5,679,425.

While fluoropolymer barrier hose has dominated the fuel hose market, many other materials are available as potential barrier layers. U.S. Pat. No. 6,945,279, which is directed to a method of making rubber hoses with an intermediate thermoplastic layer by rolling a planar resin film into a cylindrical layer with an overlap, discloses extensive lists of potential rubber materials and thermoplastic resin materials. While NBR is mentioned on the list of potential rubber materials and ethylene-vinyl alcohol copolymer (EVOH) as a potential resin film, U.S. Pat. No. 6,945,279 offers no particular guidance for selecting materials for any particular use, and no working examples are disclosed therein. Typical fuel hoses have further included multi-layer barrier constructions which combine fluoropolymers with other barrier materials including for example EVOH. EVOH is known to provide a barrier to oxygen, hydrogen, helium, and other gases, and has been used in food packaging films. EVOH is known to be sensitive to moisture or humidity, requiring lamination between other thermoplastic film materials to control exposure to moisture. EVOH has also been considered as a barrier layer in other applications, such as hydrogen fuel cell hose, usually laminated with other barrier materials.

An example of use of a thermoplastic film layer of EVOH in fuel hose is provided by U.S. Pat. No. 6,279,615, wherein the EVOH is the innermost veneer layer on the inner surface of the rubber hose. U.S. Pat. No. 5,763,034 requires that the EVOH have an ethylene content of from 30 to 50 mole % to balance competing goals of flexibility and impermeability. U.S. Pat. No. 6,279,615teaches that EVOH having less than 30 mole % ethylene has flexibility problems, especially at low temperatures, and that with more than 50 mole % ethylene, permeability to fuel increases. Regardless, the permeation rates obtained for the hose described in U.S. Pat. No. 6,279,615 were not low enough to meet current SAE standards.

U.S. Pat. No. 5,763,034 discloses fuel transfer tubes containing a layer of EVOH with ethylene content of 60 mole % or less in combination with layers of fluorinated resins, nylon, and/or polyolefin. A small amount of EVOH copoplymer may be with ethylene content of more than 60 mole % may be blended in to improve processability. Non-working examples disclosed in U.S. Pat. No. 5,763,034 utilizing EVOH without fluorinated resins do not meet the impermeability needs for alcohol-containing fuels such as CM15 (15% methanol, 40% toluene, 40% isooctane) and/or are not flexible enough for practical fuel transfer applications.

An example of use of a multi-layer barrier including EVOH as one of the layers is disclosed in U.S. Pat. No. 5,038,833, wherein the primary application is rigid plastic pipes. An example of use in a refrigerant hose of a thermoplastic barrier layer including EVOH is provided by U.S. Pat. No. 6,941,975, wherein the barrier layer requires two or three layers, including a layer of vinyl resin such as EVOH and outer layers of polyolefin and/or polyamide resin. Each resin layer has a thickness of from 0.025 to 0.25 mm. The only example provided U.S. Pat. No. 6,941,975 used a 3-layer barrier with 0.15-mm total thickness and had a permeation rate for R134 refrigerant of 3.94×10⁻⁵ g/cm/day based on a one-cm length of hose of undisclosed diameter.

An example of the use of EVOH barrier layer with a fluorinated elastomer inner layer is provided by U.S. Pat. Publication No. 2003/0087053, wherein a permeation constant of 1.6 g·mm/m²/day for CE10 fuel (10% ethanol, 40% toluene, 40% isooctane) was demonstrated for a 0.015-mm (0.6-mil) thick EVOH barrier on a 1-mm thick fluoroelastomer sheet. Although EVOH grades from a broad range of 15 to 50 mole % ethylene were mentioned, the preferred range mentioned was 25 to 35 mole % ethylene, and the only examples presented therein utilized EVOH with 32 mole % ethylene. Flexibility issues in hose applications were not discussed.

High crystallinity makes EVOH a brittle, rigid polymer with poor low-temperature flexibility. Thus, typical hose designs have required 30 to 50 mole % ethylene content for satisfactory flexibility. Alternately, or in addition, typical designs have used very thin EVOH layers coupled with additional layers of other barrier materials such as fluoropolymers, polyolefins, and/or polyamides.

### SUMMARY

The present invention is directed to systems and methods which provide a low-permeation fuel hose suitable for example for use with alcohol-containing fuels and which is very flexible. The invention further provides an economical fuel hose in that fluorinated materials are not required. Specifically the present invention provides a very low permeation rubber fuel hose based on non-fluorinated elastomer with an intermediate EVOH barrier layer of very low-ethylene EVOH, optionally reinforced with nylon textile. The present invention may be embodied in a low permeation fuel hose with a barrier layer of EVOH having less than 30 mole % ethylene and no additional thermoplastic or fluorinated-polymer barrier layers.

Embodiments of the present invention are directed to a fuel hose comprising a rubber inner tube, a rubber outer cover, and an intermediate barrier layer comprising ethylene-vinyl alcohol copolymer (EVOH) having an ethylene content less than 30 mole %, preferably about 24 mole %. The barrier layer consists essentially of EVOH. The thickness of the barrier layer may be in the range from 0.025-0.76 mm (1 to 30 mils), preferably from 0.025-0.38 mm (1 to 15 mils), or from 0.07-0.18 mm (3 to 7 mils). At least one of the inner tube and outer cover may comprise acrylonitrile-butadiene rubber (NBR), hydrogenated acrylonitrile-butadiene rubber (HNBR), epichlorohydrin rubber (ECO), chlorosulfonated polyethylene (CSM), polychloroprene rubber (CR), chlorinated polyethylene (CPE), ethylene-vinyl acetate (EVM), or nitrile-polyvinylchloride (NBR-PVC) blended elastomer. Both of the inner tube and a tie layer may comprise the same rubber composition, for example NBR rubber. Preferably, neither the inner tube, the outer cover, nor the barrier layer need comprise fluorinated elastomer rubber or fluoropolymer-based plastic. Nylon yarn reinforcement may be applied directly to the EVOH barrier layer, or to a friction or adhesion layer which may be applied to the barrier layer prior to the reinforcement. An adhesion system, such as a resorcinol, formaldehyde donor, and silica (RFS) system, may be used in the friction layer and/or the inner tube layer. The need for reinforcement may be significantly reduced by the EVOH barrier layer due to a dramatic increase in burst strength.

The present invention is also directed to a hose assembly or fuel system employing a fuel hose according to the above description and at least one fitting, such as a clamp, coupling, connector, nipple, tubing, or the like, and/or a fuel or fluid handling component such as a tank, pump, canister, rail, or injector or the like.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

The accompanying drawings, which are incorporated in and form part of the specification in which like numerals designate like parts, illustrate embodiments of the present invention and together with the description, serve to explain the principles of the invention. In the drawings:
FIGURE 1 is a partially fragmented perspective view of an embodiment of a hose constructed in accordance with the present invention; and,
FIGURE 2 is a schematic of an embodiment of a hose system constructed in accordance with the present invention.

### DETAILED DESCRIPTION

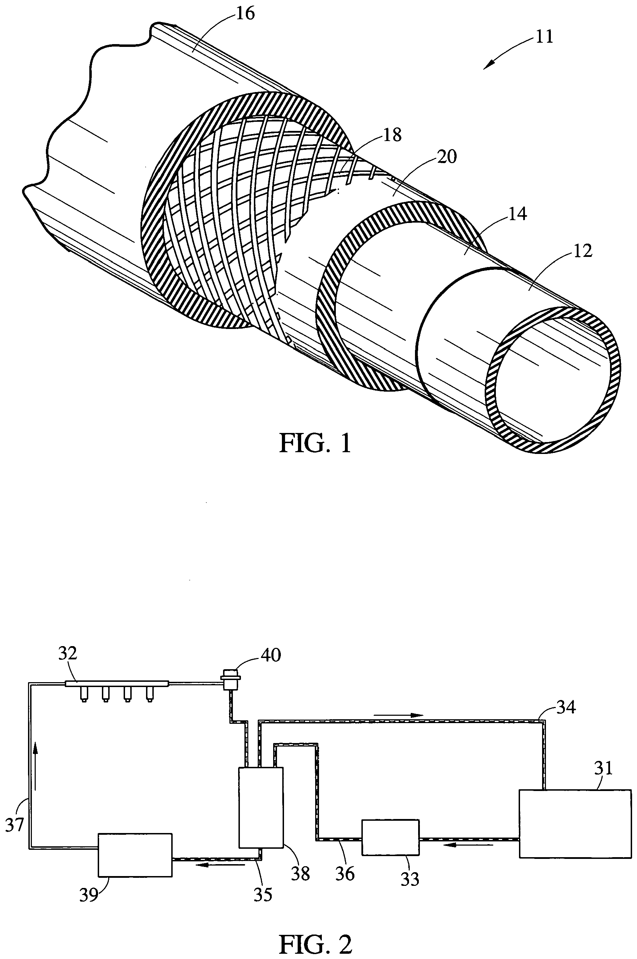

Referring to FIG. 1, a hose is illustrated, constructed according to one embodiment of the present invention. Hose 11 comprises inner tube 12, intermediate thermoplastic barrier layer 14 of ethylene-vinyl alcohol copolymer (EVOH), and outer cover 16. Optionally, hose 11 may comprise reinforcement layer 18 positioned somewhere within the hose. As another option, hose 11 may comprise one or more tie layers and/or adhesive coatings between various layers. FIG. 1 shows reinforcement layer 18 applied over tie layer 20. Intermediate layer 14 could be disposed within one of the rubber layers, thus effectively splitting that rubber layer into two separate layers.

Intermediate barrier layer 14 consists essentially of EVOH having an ethylene content less than 30 mole %. The thickness of the intermediate layer may be in the range from 0.025 to 0.76 mm (1 to 30 mils), preferably from 0.025 to 0.38 mm (1 to 15 mils), or from 0.05 to 0.25 mm (2 to 10 mils). EVOH is believed to be a good permeation barrier to gases because it is a highly crystalline polymer and because of the high cohesive energy of the vinyl alcohol groups. Generally, the higher the crystallinity, the lower the permeability. However, high crystallinity makes EVOH a brittle, rigid polymer with poor low-temperature flexibility. The higher the ethylene content in the EVOH, the lower the crystallinity and the higher the flexibility. Thus, prior hose designs have required 30 to 50 mole % ethylene content for satisfactory flexibility. Alternately, prior designs have used very thin EVOH layers coupled with additional layers of other barrier materials such as fluoropolymers, polyolefins, and/or polyamides. However, in accordance with embodiments of the present invention, a flexible fuel hose with exceptionally low permeability to alcohol-containing fuels can be constructed using a single barrier layer consisting essentially of EVOH having less than 30 mole % ethylene content.

Regarding the aforementioned cohesive energy of the vinyl alcohol groups, EVOH exhibits an associated sensitivity to moisture, resulting in increased permeability in high humidity environments. Such humid environments may be present at almost any time during the life of a hose, from a steam vulcanization environment during manufacture of a hose to the place of use in a vehicle in a wet or humid climate. In accordance with embodiments of the present invention, the use of suitable non-fluorinated rubber inner tube and outer cover layers sufficiently protects the EVOH barrier layer from moisture. Suitable rubber compositions may be based on NBR, HNBR, CSM, CR, ECO, EVM, CPE, NBR-PVC, ethylene methylacrylate elastomer (EAM), acrylic or acrylate elastomer (ACM), or the like. Preferred rubber compositions for the inner tube for alcohol-containing fuels are based on NBR, NBR-PVC, ECO, and/or HNBR. It should be understood that steps may nevertheless be taken to prevent detrimental exposure to steam or moisture, such as sealing the ends of the hose during vulcanization, and the like.

Suitable grades of EVOH for the barrier layer are those with less than 30 mole % ethylene. Preferably, suitable EVOH has less than about 29 mole % ethylene, or may have from about 21 mole % to 27 mole % ethylene. A preferred grade of EVOH is EVAL™ M100B, which has about 24 mole % ethylene and is sold under that trade name by Kuraray Co. Ltd. and EVAL Company of America. Other suitable grades may include Soarnol® V2603, D2903, D2908, and DT2903, sold under that trade name by Nippon Synthetic Chemical Industry Co., Ltd.

In general, tube 12 may comprise one or more layers of one or more flexible materials such as an elastomer or a plastic. Thus, the inner surface material of the tube may be chosen to withstand the fluids and environmental conditions expected within the hose. According to an embodiment of the invention, the inner tube is of a single non-fluorinated rubber formulation. The rubber formulation of the inner tube may be based on ECO, NBR, NBR-PVC blends, HNBR or the like and may be formulated in accordance with known methods of rubber compounding. The rubber formulation may include a blend of elastomers, such as a blend of high- and low-acrylonitrile grades of NBR with PVC.

A tie layer may be used to facilitate bonding between the EVOH and the cover layer and/or the textile reinforcement. A tie layer may comprise a rubber composition based on ECO, NBR, NBR-PVC, HNBR, or the like. To provide or promote adhesion, a tie layer rubber composition may advantageously include a reactive resin system such as or equivalent to resorcinol, a formaldehyde donor, and silica (commonly referred to as an "RFS" adhesion system, examples of which are disclosed in Th. Kempermann, et al., "Manual for the Rubber Industry," 2d Ed., Bayer AG, Leverkusen, Germany, pp 372 & 512-535 (1991). An RFS adhesion promoting system may also be added to the inner tube rubber composition for improved adhesion of the EVOH layer to the inner tube. Thus, in one embodiment, the inner tube and a tie layer may be of the same rubber composition, for example based on NBR, NBR-PVC, HNBR, ECO, or the like with an RFS adhesion system incorporated therein. A tie layer may be called a friction layer. A tie layer may be an adhesive coating.

In general, cover 16 may be made of one or more suitable flexible elastomeric or plastic materials designed to withstand the exterior environment encountered. According to an embodiment of the invention, the outer cover is of a single non-fluorinated rubber formulation. The rubber formulation of the outer cover may be based on NBR, HNBR, CSM, CR, ECO, EVM, ACM, EAM, NBR-PVC, chlorinated polyethylene (CPE), ethylene-alpha-olefin elastomer (such as those commonly referred to as EPM, EPDM, EOM, EBM, and the like, where E, P, D, O, and B represent ethylene, propylene, diene, octene, and butene respectively), and the like, which may be formulated with other ingredients in accordance with known methods of rubber compounding. Tube 12 and cover 16 may be made of the same material composition or of different compositions.

As shown in FIG. 1 and mentioned above, reinforcement member 18 may be present in the hose. The reinforcement may be applied directly onto intermediate layer 14 and thereby at least a portion of the reinforcement may be in contact with the intermediate layer. Preferably, tie layer 20 is first applied to intermediate layer 14. Then, reinforcement 18 is applied onto tie layer 20. Outer cover 16 may substantially surround or penetrate reinforcement member 14 and also be in contact with at least a portion of the intermediate layer or in contact with tie layer 20. The outer cover may advantageously be a rubber composition formulated to bond to a textile reinforcement and/or to the EVOH intermediate layer. For example, the outer cover may be NBR elastomer with silica filler and resorcinol-formaldehyde or phenol-formaldehyde resin as an RFS adhesion promoting system. A preferred arrangement is to apply a spiraled layer of nylon yarn onto the EVOH barrier layer or onto a tie layer. The spiraled layer may comprise two layers, each applied at or near the so-called lock angle or neutral angle of about 54° with respect to the longitudinal axis of the hose but with opposite spiral directions. The textile layer may be knit, braided, or a wrapped woven or non-woven fabric. It has been found that nylon fiber or yarn used in combination with the EVOH, CSM, and NBR-PVC, results in a remarkable increase in burst pressure rating for the resulting hose. Thereby, the need for reinforcement in embodiments of the present hose may be reduced. Other useful fibers for reinforcement, such as polyester (PET) or aramid, may require adhesive treatment or another tie layer in order to achieve adequate bonding among the layers of the hose. Useful reinforcement materials include aramid, polyamide or nylon, rayon, vinylon, metallic wire, and the like.

Hose 11 may be formed by methods such as molding, wrapping, and/or extrusion. For example, an inner tube may be extruded, then an intermediate layer of EVOH may be extruded onto the inner tube. Then a tie layer may be extruded or applied to the intermediate layer. Preferably the barrier layer of EVOH is disposed in the hose by extruding a tubular layer of EVOH onto the inner tube in a continuous manner with no overlap or seam. A textile reinforcement may then be spiraled, knit, wrapped, or braided onto the intermediate layer or a tie layer may be applied before the textile reinforcement. Then a cover stock may be applied. Alternately, the layers may be built up on a mandrel. Finally, the assembly may be cured or vulcanized, by heat or radiation, on a mandrel, for example in an oven or a steam vulcanizer, or wrapped, and/or according to other methods available to those skilled in the art.

One hose construction has been illustrated in FIG. 1. It should be understood that a wide variety of other constructions may be utilized in carrying out the invention. For example, the hose may have additional inner, outer, or intermediate layers comprising plastic or elastomeric compositions for particular purposes such as fluid resistance, environmental resistance, or physical characteristics and the like. As another example, additional textile or metal reinforcements, jackets, covers or the like may be utilized as needed or desired. Helical wires may be built into the hose wall or utilized inside the hose for collapse resistance. Textile reinforcements may be treated with adhesives, friction or skim layers, or the like.

Instead of extruding the barrier layer as a tube, films or tapes of barrier layers may be wrapped around an inner tube and the laps fused or melted to create a continuous barrier layer. Curved hose could be made with EVOH barrier materials as well. For example, in a two step process, an uncured hose may be placed onto a curved mandrel or placed into a mold for vulcanization so that the hose would retain a curved shaped thereafter. Likewise, other known molding techniques may be utilized.

In operation, a fuel hose may be a component of a hose assembly or a fuel line assembly or a fluid transfer system. A fluid transfer system generally comprises a hose, and at one or more ends of the hose, one or more clamps, couplings, connectors, tubing, nozzles, and/or fittings, fluid handling devices, and the like. By way of example, FIG. 2 is a schematic representation of a hose system employing embodiments of the inventive hose. In particular, FIG. 2 represents a typical automotive fuel system. Referring to FIG. 2, fuel tank 31, fuel pump 33, surge tank or reservoir 38 and fuel pump 39 may be connected by one or more fuel hose sections 35 and 36, provided by embodiments of the invention. Fuel return line 34 may also include a section of the present inventive hose. Hose sections 35, 36, and 34 may be of a low pressure construction employing embodiments of the present invention. Medium or high pressure hose section 37, according to an embodiment of the invention, may be used to connect fuel pump 39 to fuel rail 32 with its injectors and to fuel pressure regulator 40. It should be understood that a fuel system utilizing the inventive hose is not limited to automotive vehicle systems, but may include fuel transfer systems throughout the fuel supply chain, or fuel systems in marine applications, aviation, and the like, or anywhere else very low permeability flexible hose is desirable. For example, the inventive hose may be also useful for transporting other fluids, including gases, including for example oxygen, hydrogen, or carbon dioxide, liquefied or gaseous propane or natural gas, other fuels, and refrigerants, and the like, with minimal permeation losses.

An Example (Ex.) inventive hose of 6-mm (¼-inch) inside diameter was constructed in accordance with an embodiment of the present invention with an NBR rubber inner tube including an RFS adhesive promoting system 0.5-mm (20-mil) thick; a 0.130-mm (5-mil) thick intermediate barrier layer of EVAL M100B EVOH (with 24 mole % ethylene); a tie layer of the same NBR rubber as the tube but 1-mm (40-mil) thick; a nylon spiral-wrapped double-layer yarn reinforcement; and a CSM rubber outer cover layer 1.3-mm (50-mil) thick. A number of conventional or comparative examples (Comp. Ex.) were constructed using other rubber and/or barrier materials and tested in the same manner as the Ex. inventive hose. Comp. Ex. 1 represents a commercial fuel hose having a fluoroelastomer tube stock (0.020"), a CSM cover stock, a polyester (PET) reinforcement, and no additional barrier layer. Comp. Ex. 1 has met SAE J30R9 (REV. JUN1998) for fuel hose. Comp. Ex. 2 represents a commercial fuel hose having an NBR tube, a THV barrier, an NBR tie layer, a nylon reinforcement, and a CSM cover. Comp. Ex. 2 is designed to meet the permeation requirements of SAE J30R11 or R12 for fuel hose. Comp. Ex. 3 is a conventional fuel hose of NBR rubber tube, polyester reinforcement, and CSM cover. Comp. Ex. 3 has met SAE J30R7 (REV. JUN1998) for fuel hose. Comp. Ex. 4 is a conventional fuel hose of NBR rubber tube, polyester reinforcement, and NBR/PVC cover. Comp. Ex. 4 is a commercially available hose meeting the 100R2 level in the SAE J517 specification (REV. MAR2006).

Permeability of a hose was measured with a number of fuel-type fluids using the reservoir method in SAE J30 Section 9 but at an elevated temperature of 60°C. The method uses stationary fuel from a closed reservoir with a metallic plug to seal the end of the hose. Every week, the fuel was drained from the hose into the reservoir so fresher fuel would then be returned into the hose. The test duration was for 1000 hours of conditioning plus 10 days of permeation measurement. This method was used as a convenient way to screen constructions and to approximate the permeation measurement conditions of SAE J1737, a preferred standard in fuel permeation measurements. It may be noted that the method of SAE J1737 involves circulating hot fuel or vapor under controlled pressure.

The results of the permeability testing, presented in Table 1, show the dramatic improvement in impermeability of the inventive Example hose over the comparative hoses. As a general observation, it appears that the inventive hose is about 50 to 100 times lower in permeability to various fuels than the best comparative hoses.

**Table 1**

| | Ex. | Comp. Ex. 1 | Comp. Ex. 2 | Comp. Ex. 3 | Comp. Ex. 4 |
|---|---|---|---|---|---|
| Hose Construction: | | | | | |
| Inner tube | NBR 0.5-mm | FKM 0.5-mm | NBR 0.5-mm | NBR 1.9-mm | NBR 1.8-mm |
| Barrier layer | EVOH 0.13-mm | | THV 0.13-mm | | |
| Tie layer | NBR 1-mm | CSM 1.14-mm | NBR 1-mm | | |
| Reinforcement | Nylon spiral | PET braid | Nylon spiral | PET spiral | PET spiral |
| Cover | CSM 1.3-mm | CSM 1-mm | CSM 1.3-mm | CSM 1-mm | NBR/PVC 1.4-mm |

| Permeability to fuels in g/m²/day at 60°C | | | | | |
|---|---|---|---|---|---|
| CM15 | 0.50 | 70-110 | 35-75 | | |
| Fuel C | 0.43 | 90-150 | 20-60 | | |
| CE10 | 0.39 | 170-200 | 35-55 | 300 | 855 |
| Indolene | 0.95 | 60-90 | 25-45 | | |

The permeation rate for the inventive example may also be compared to some of the patents mentioned in the above background section, as well as to various fuel hose standards such as SAE J30. For example, SAE J30 R6, R7,-R8 and R9 applies to conventional rubber hoses without barrier layers which are tested at room temperature, with closed reservoir and no circulation. R9 requires a permeability to Fuel C of <15 g/m²/day. R6, R7, and R8 require permeability to Fuel C of <600, <550, and <200 g/m²/day, respectively. SAE J30 R11 and R12 apply to low-permeation hoses which are tested according to SAE J1737 at 40°C and 60°C respectively, under pressures of 14.5 kPa (2.1 psi) and 0.2 MPa (29 psi) respectively, and with circulation, and require a permeability for CM15 (a much more aggressive test fuel than Fuel C) of <25 g/m²/day for category A (the most stringent rating). The temperature increase alone from room temperature to 40°C is expected to increase the permeability by a factor of about 10 times, partly due to increased diffusion rate and partly due to increased vapor pressure of fuel in the closed reservoir. The present stationary fuel test has been carried out at 60°C which is expected to increase the permeability by an additional factor of about 20 times over a 40°C test, all other factors constant. The pressure of the R11 test condition is probably not much different from the vapor pressure in a closed reservoir at elevated temperature. However, the effects of circulation and pressure in the R12 test may be estimated to increase the permeability by a factor of up to about 20 times over a stationary test at 40°C. Thus, the inventive hose, having permeability to stationary CM15 fuel of about 0.5 g/m²/day at 60°C, is estimated to be about 1000 times better (25x20/0.5) than required by, the R11 standard and to comfortably meet the R12 standard. Thus, the inventive hose is well suited for handling the increased impermeability demands associated with alcohol-containing fuels.

Actual testing according to SAE J1737 at 40°C with indolene at 0.2 MPa (29 psi) pressure was carried out on the Example inventive hose and on a comparative fluoropolymer barrier hose. The inventive hose exhibited a permeation rate of 1 g/m²/day. The comparative fluoropolymer barrier hose exhibited a permeation rate of 8 g/m²/day. Thus, it is noted that the SAE J30 stationary permeation test gives a similar result at 60°C to the SAE J1737 circulation test at 40°C and 0.2 MPa (29 psi). It is believed that the pressure effect about counteracts the temperature effect. Experience has indicated that the 20-fold temperature effect mentioned above may hold for either test, and that comparisons based on one test may hold up when repeated on the other test. Thus, it is believed the inventive hose may have permeability to CM15 and/or CE10 fuel of less than 2 g/m²/day at 40°C and 0.2 MPa when tested according to SAE J1737. Furthermore, it is believed the inventive hose may have permeability to CM15 or CE10 fuel of less than 40 g/m²/day at 60°C and 0.2 MPa when tested according to SAE J1737. The inventive hose may have permeability to CM 15 and/or CE10 fuel of less than 2 g/m²/day at 60°C when tested according to a stationary fuel test such as SAE J30 section 9.

For a comparison to other barriers, the laminate barrier of U.S. Pat. Publication No. 2003/87053 exhibited permeability to CE10 fuel of 1.6 g/m²/day at room temperature. As mentioned above, increasing the temperature from room temperature to 60°C is expected to increase the permeation by a factor of 200 times. Thus, the example inventive hose is about 100 times better than the laminate of U.S. Pat. Publication No. 2003/87053.

As another comparison, U.S. Pat. No. 5,763,034 presents data for FAM15 fuel (same as CM15) permeability at 60°C under stationary conditions for a variety of barrier hoses. Assuming the "φ6×φ8" hose of that patent has an area of 0.022 m²/m of length (based on an average diameter of 7 mm) gives a multiplicative factor of 45 to convert g/m/day to g/m²/day. Thus, examples 7, 9, 10 and 12 of Table 1 of that patent, which contain EVOH barriers in various configurations exhibit permeabilities ranging from about 36 to 150 g/m²/day, not sufficient to meet the SAE J30R9 or R11 standards mentioned above. Two of the EVOH examples from U.S. Pat. No. 5,763,034 also failed the flexibility test disclosed therein. The embodiments disclosed in Table 2 of that patent all combine fluorinated and other barrier layers with EVOH to reduce the permeability to CM15 to about 1.8 to 5.9 g/m²/day at 60°C. The present inventive hose is about an order of magnitude lower in permeability, more flexible, and can be made without use of fluorinated polymers or multi-layer barriers.

Comparison with the hose disclosed in U.S. Pat. No. 6,941,975, which exhibited permeability of 3.94×10⁻⁵ g/cm/day for refrigerant 134A at 90°C, is difficult without information on the hose diameter or area per cm length. Nevertheless, it is believed that the inventive hose would be at least comparable to that hose in permeability, while the inventive hose advantageously accomplishes low permeation without use of a multi-layered barrier. Thus, an embodiment of the inventive hose may also be useful for refrigerant applications.

The example hoses were also tested for bursting pressure, revealing another surprising result. The typical fuel hose application generally requires a working pressure of less than 0.7 MPa (100 psi). With typical spiraled nylon reinforcement, rubber hose generally exhibits a burst pressure of about 1.7 to 2.4 MPa (250 to 350 psi). With the addition of the 0.13-mm (5-mil) layer of EVOH, the inventive Example hose exhibited a burst pressure of about 6.2 MPa (900 psi). Thus, the need for reinforcement may be significantly reduced in the inventive hose, or the working pressure significantly increased.

Flexibility testing at low temperatures was carried out on the inventive example hose. Since the flexural modulus of EVOH is about 4800 MPa, an order of magnitude higher than that of nylon (400 MPa) or THV (210 MPa), one might expect very poor flexibility for EVOH, as taught in the art. On the contrary, the inventive fuel hose of Example 1 met the SAE J30R7 cold flexibility standard, which requires an unaged hose sample to pass a flexibility test after 5 hours at -40°C, and a sample aged 70 hours at 125°C in ASTM IRM903 oil to pass a flexibility test after 5 hours at -34°C. Qualitative testing of EVOH showed that flexibility was maintained at 0.13-mm (5-mil) thickness after 3 days at -50°C (-58°F).

## Claims

1. A flexible fuel hose (11) comprising:
a rubber inner tube (12);
a rubber outer cover (16); and
an intermediate barrier layer (14) consisting essentially of ethylene-vinyl alcohol copolymer having an ethylene content less than 30 mole %,
wherein said rubber tube (12) and said rubber cover (16) are based on non-fluorinated rubber compositions.

2. The hose of claim 1 wherein said barrier layer (14) is a seamless, tubular layer.

3. The hose of claim 1 further comprising a non-fluorinated tie layer (20) between said barrier layer (14) and said cover (16).

4. The hose of claim 1 wherein the ethylene-vinyl alcohol copolymer has an ethylene content of from about 20% to about 29%.

5. The hose of claim 1 wherein the ethylene-vinyl alcohol copolymer has an ethylene content of about 24%.

6. The hose of claim 1 wherein the radial thickness of the intermediate barrier layer (14) is in the range from 0.025 mm to 0.76 mm.

7. The hose of claim 1 wherein the radial thickness of the intermediate barrier layer (14) is in the range from 0.025 mm to 0.38 mm.

8. The hose of claim 1 wherein the radial thickness of the intermediate barrier layer (14) is in the range from 0.07 mm to 0.18 mm.

9. The hose of claim 3 further comprising a textile or fiber reinforcement (18), wherein said reinforcement (18) resides between the tie layer (20) and the outer cover (16).

10. The hose of claim 1 having a permeability to CM 15 or CE10 Fuel of less than 2 g/m²/day at 40°C or less than 40 g/m²/day at 60°C when tested according to SAE J1737, or less than 2 g/m²/day at 60°C when tested according to a SAE J30 Section 9.

11. The hose of claim 9 wherein said inner tube (12) rubber composition comprises at least one selected from the group consisting of NBR, HNBR, CR, CSM, ECO, and CPE; and wherein said outer cover (16) composition comprises at least one selected from the group consisting of NBR, HNBR, CR, CSM, ECO, CPE, EVM, EPM, and EPDM.

12. A method comprising:
forming an inner tube (12) of non-fluorinated rubber,
forming an outer cover (16) of non-fluorinated rubber;
disposing a barrier layer (14) consisting essentially of ethylene-vinyl alcohol copolymer having less than 30 mole % ethylene content on said inner tube (12);
thereby providing a fuel hose (11) with low permeability to fuel and increased burst pressure.

13. The method of claim 12 wherein said disposing comprises extruding a tubular layer of ethylene-vinyl alcohol copolymer onto said inner tube (12) in continuous manner with no overlap or seam.

14. The method of claim 13 further comprising:
forming a tie layer (20) of non-fluorinated rubber on said intermediate layer (14).

15. The method of claim 14 further comprising:
applying a textile reinforcement layer (18) on said tie layer (20).

## Patentansprüche

1. Flexibler Kraftstoffschlauch (11), umfassend:
einen Kautschuk-Innenschlauch (12);
einen Kautschuk-Außenschlauch (16); und
eine Zwischensperrschicht (14), die im Wesentlichen aus Ethylen-Vinylalkohol-Copolymer besteht und einen Ethylengehalt von weniger als 30 Mol-% aufweist,
wobei der Kautschukschlauch (12) und die Kautschukabdeckung (16) auf nicht fluorierten Kautschukzusammensetzungen basieren.

2. Schlauch nach Anspruch 1, wobei die Sperrschicht (14) eine nahtlose schlauchförmige Schicht ist.

3. Schlauch nach Anspruch 1, ferner umfassend eine nicht fluorierte Verbindungsschicht (20) zwischen der Sperrschicht (14) und der Abdeckung (16).

4. Schlauch nach Anspruch 1, wobei das Ethylen-Vinylalkohol-Copolymer einen Ethylengehalt von etwa 20% bis etwa 29% aufweist.

5. Schlauch nach Anspruch 1, wobei das Ethylen-Vinylalkohol-Copolymer einen Ethylengehalt von etwa 24% aufweist.

6. Schlauch nach Anspruch 1, wobei die radiale Dicke der Zwischensperrschicht (14) im Bereich von 0,025 mm bis 0,76 mm liegt.

7. Schlauch nach Anspruch 1, wobei die radiale Dicke der Zwischensperrschicht (14) im Bereich von 0,025 mm bis 0,38 mm liegt.

8. Schlauch nach Anspruch 1, wobei die radiale Dicke der Zwischensperrschicht (14) im Bereich von 0,07 mm bis 0,18 mm liegt.

9. Schlauch nach Anspruch 3, ferner umfassend eine Gewebe- oder Faserverstärkung (18), wobei die Verstärkung (18) zwischen der Verbindungsschicht (20) und der äußeren Abdeckung (16) liegt.

10. Schlauch nach Anspruch 1, der eine Permeabilität für CM15- oder CE10-Kraftstoff von weniger als 2 g/m²/Tag bei 40° C oder weniger als 40 g/m²/Tag bei 60° C gemäß SAE J1737-Prüfung aufweist, oder weniger als 2 g/m²/Tag bei 60° C gemäß Prüfung nach SAE J30 Abschnitt 9.

11. Schlauch nach Anspruch 9, wobei die Kautschukzusammensetzung des Innenschlauchs (12) mindestens eine ist, die ausgewählt ist aus der Gruppe, bestehend aus NBR, HNBR, CR, CSM, ECO und CPE umfasst; und wobei die äußere Abdeckung (16) mindestens eine ist, die ausgewählt ist aus der Gruppe, bestehend aus NBR, HNBR, CR, CSM, ECO, CPE, EVM, EPM und EPDM.

12. Verfahren, umfassend:
Bilden eines inneren Schlauchs (12) aus nicht fluoriertem Kautschuk, der eine äußere Abdeckung (16) aus nicht fluoriertem Kautschuk bildet;
Anordnen einer Sperrschicht (14), die im Wesentlichen aus Ethylen-Vinylalkohol-Copolymer mit weniger als 30 Mol-% Ethylengehalt besteht, auf dem Innenschlauch (12);
dadurch Bereitstellen eines Kraftstoffschlauchs (11) mit geringer Kraftstoffdurchlässigkeit und erhöhtem Berstdruck.

13. Verfahren nach Anspruch 12, wobei das Anordnen das kontinuierliche Extrudieren einer schlauchförmigen Schicht aus Ethylen-Vinylalkohol-Copolymer auf den Innenschlauch (12) ohne Überschneidung oder Naht umfasst.

14. Verfahren nach Anspruch 13, ferner umfassend:
Bilden einer Verbindungsschicht (20) aus nicht fluoriertem Kautschuk auf der Zwischenschicht (14).

15. Verfahren nach Anspruch 14, ferner umfassend:
Aufbringen einer Gewebeverstärkungsschicht (18) auf die Verbindungsschicht (20).

## Revendications

1. Tuyau de carburant souple (11) comprenant :
un tube interne en caoutchouc (12) ;
une enveloppe externe en caoutchouc (16) ; et
une couche barrière intermédiaire (14) consistant essentiellement en un copolymère d'éthylène-alcool vinylique ayant une teneur en éthylène de moins de 30 %mol,
dans lequel ledit tube en caoutchouc (12) et ladite enveloppe en caoutchouc (16) sont à base de compositions de caoutchouc non fluoré.

2. Tuyau selon la revendication 1, dans lequel ladite couche barrière (14) est une couche sans soudure et tubulaire.

3. Tuyau selon la revendication 1, comprenant en outre une couche de liaison non fluorée (20) entre ladite couche barrière (14) et ladite enveloppe (16).

4. Tuyau selon la revendication 1, dans lequel le copolymère d'éthylène-alcool vinylique a une teneur en éthylène d'environ 20 % à environ 29 %.

5. Tuyau selon la revendication 1, dans lequel le copolymère d'éthylène-alcool vinylique a une teneur en éthylène d'environ 24 %.

6. Tuyau selon la revendication 1, dans lequel l'épaisseur radiale de la couche barrière intermédiaire (14) est de 0,025 mm à 0,76 mm.

7. Tuyau selon la revendication 1, dans lequel l'épaisseur radiale de la couche barrière intermédiaire (14) est de 0,025 mm à 0,38 mm.

8. Tuyau selon la revendication 1, dans lequel l'épaisseur radiale de la couche barrière intermédiaire (14) est de 0,07 mm à 0,18 mm.

9. Tuyau selon la revendication 3, comprenant en outre un renforcement textile ou fibreux (18), ledit renforcement (18) se trouvant entre la couche de liaison (20) et l'enveloppe externe (16).

10. Tuyau selon la revendication 1, ayant une perméabilité au carburant CM15 ou CE10 de moins de 2 g/m²/jour à 40 °C ou de moins de 40 g/m²/jour à 60 °C, déterminée par des essais selon la norme SAE J1737, ou de moins de 2 g/m²/jour à 60 °C, déterminée par des essais selon la Section 9 de la norme SAE J30.

11. Tuyau selon la revendication 9, dans lequel la composition de caoutchouc dudit tube interne (12) contient au moins un élément du groupe constitué de NBR, HNBR, CR, CSM, ECO, et CPE ; et dans lequel la composition de ladite enveloppe externe (16) contient au moins un élément du groupe constitué de NBR, HNBR, CR, CSM, ECO, CPE, EVM, EPM, et EPDM.

12. Procédé comprenant :
la formation d'un tube interne (12) de caoutchouc non fluoré,
la formation d'une enveloppe externe (16) de caoutchouc non fluoré ;
le fait de disposer une couche barrière (14) consistant essentiellement en un copolymère d'éthylène-alcool vinylique ayant une teneur en éthylène de moins de 30 %mol sur ledit tube interne (12) ;
en produisant ainsi un tuyau de carburant (11) présentant une faible perméabilité au carburant et une pression d'éclatement plus élevée.

13. Procédé selon la revendication 12, dans lequel ledit fait de disposer comprend l'extrusion d'une couche tubulaire de copolymère d'éthylène-alcool vinylique sur ledit tube interne (12) de façon continue, sans chevauchement ni soudure.

14. Procédé selon la revendication 13, comprenant en outre :
la formation d'une couche de liaison (20) de caoutchouc non fluoré sur ladite couche intermédiaire (14).

15. Procédé selon la revendication 14, comprenant en outre :
l'application d'une couche de renforcement textile (18) sur ladite couche de liaison (20).
